# EUROPÄISCHE PATENTANMELDUNG

(11) **EP 4 438 533 A1**
(43) Veröffentlichungstag der Anmeldung: **02.10.2024**
(21) Anmeldenummer: 24160944.5
(22) Anmeldetag: 01.03.2024
(51) Int. Cl.: B65G 57/30, B65B 35/52, B65B 29/02, B65B 35/04, B65B 35/20, B65B 57/20, B65B 5/06, B65B 23/14

(54) **VERFAHREN UND VORRICHTUNG ZUM AUSBILDEN VON VERPACKUNGSSTAPELN**

(30) Priorität: 27.03.2023 EP 23164274
(71) Anmelder: Teepack Spezialmaschinen GmbH & Co. KG, 40667 Meerbusch (DE)
(72) Erfinder: Vetter, Holger, 41352 Korschenbroich (DE); Reichel, Wolfgang, 47877 Willich (DE)
(74) Vertreter: Grünecker Patent- und Rechtsanwälte PartG mbB

(57) **Zusammenfassung**

Die vorliegende Erfindung betrifft ein Verfahren zum Ausbilden von Verpackungsstapeln (180) durch Stapeln von Aufgussbeuteln (20) und eine zur Durchführung des Verfahrens geeignete Vorrichtung. Bei dem Verfahren wird ein einzelner Aufgussbeutel (20) von einer Förderstrecke (22; 100) entnommen, auf welcher einzelne Aufgussbeutel (20) mit Abstand zueinander und hintereinander vorgesehen einer Entnahmestation (104) zugeführt werden, in der die Aufgussbeutel (20) zur Bildung des Verpackungsstapels (180) in einer Stapelhalteeinrichtung (130) gegeneinander anliegend angeordnet werden, die bei Erreichen einer den Verpackungsstapel (180) ausbildenden Anzahl von Aufgussbeuteln (20) entleert wird. In der Entnahmestation wird ein einzelner Aufgussbeutel (20) von der Förderstrecke (22; 100) abgehoben und in eine Stapelhalteeinrichtung (130) überführt. Dies erfolgt durch einen Stapelhub (SH) einer vertikal beweglich geführten Einstoßeinrichtung (111), die üblicherweise beidseits der Förderstrecke (22, 100) vorgesehene Einstößern (122) aufweist. Die Einstoßeinrichtung (111) bewirkt auch einen Überführungshub (UH), der größer ist als der Stapelhub (SH) und durch den ein den Verpackungsstapel (180) vervollständigender Aufgussbeutel (20) in eine Kassette (132) überführt wird, deren Kassettenspeicherschacht (146) mit dem Zwischenspeicherschacht (148) des Zwischenspeichers (134) fluchtet und die entleert wird, während nachfolgende Aufgussbeutel (20) zunächst in dem Zwischenspeicher (134) gestapelt werden.

## Beschreibung

Die vorliegende Erfindung betrifft ein Verfahren zum Ausbilden von Verpackungsstapeln durch Stapeln von Aufgussbeuteln und eine zur Durchführung des Verfahrens geeignete Vorrichtung.

Aus der EP 0 064 709 B1 ist eine Vorrichtung zum Verpacken von Beutelverpackungen bekannt. Diese hat an einem Drehkreuz angeordnete Stapeleinrichtungen, in welche die Beutelverpackungen von unten eingeschoben werden. Dies erfolgt durch an gegenläufig rotierenden Revolver vorgesehenen Platten, die eine Beutelverpackung von unten von einer Förderstrecke, anheben und in die Stapelhalteeinrichtung überführen. Die Stapelhalteeinrichtung ist zweiteilig ausgebildet und hat einen unteren Zwischenspeicherschacht und einem darüber vorgesehenen Kassetten-Speicherschacht, der zur weiteren Verpackung der Stapelung durch Verschwenken des Drehkreuzes in eine Kartonverpackung verbracht werden kann. Zum Ausbildung des Stapels sind die Platten jeweils in der Horizontalen ausgerichtet werden. Die Platten schieben jeweils den nachfolgenden Beutel in den Zwischenspeicherschacht ein. Verschlussklappen die an motorisch angetriebenen Schwenkarmen vorgesehen sind, befinden sich hierbei in einer Wartestellung. Ein Zähler zählt in die Stapelung eingebrachte Beutelverpackungen. Die diesen Zähler passierenden Beutelverpackungen werden zwangsläufig von den Revolvern angehoben und der Stapelung zugeführt. Ist die Anzahl der in die Stapelung aufzunehmenden Beutelverpackungen erreicht, gibt der Zähler ein Signal, um eine zunächst unterhalb des Stapelschachtes befindliche Hubplatte in waagerechter Richtung zwischen die Stapelung und die Förderstrecke zu bringen. Diese Hubplatte hebt die in dem Zwischenspeicher enthaltenen Beutelverpackungen an. Die Klappen verfahren in ihre Schließstellung. Die Hubplatte wird danach wieder in ihre Wartestellung verbracht.

Bei einem aus EP 2 812 250 B1 vorbekannten Verfahren werden einzelne Aufgussbeutel von einer Förderstrecke entnommen, die mit einem umlaufenden Förderband zusammenwirkt, das die einzelnen zuvor hergestellten Aufgussbeutel von einer Beutelherstellungseinrichtung einer Stapelstation zuführt, in welcher die Beutel zu einem Verpackungsstapel gestapelt werden. Der zuvor erwähnte Stand der Technik hat eine durch zwei sich parallel erstreckende Förderbänder, die den jeweiligen Aufgussbeutel zwischen sich klemmen, gebildete Zuführstrecke, die den einzelnen Aufgussbeutel von einer Förderstrecke entnimmt und einer Einbringstation zuführt, in welcher mehrere Aufgussbeutel zu einem Verpackungsstapel gestapelt werden. Dazu ist ein verschwenkbarer Arm vorgesehen, der den einzelnen Aufgussbeutel von der Zuführstrecke rechtwinklig zu der Bewegungsrichtung der Förderbänder entnimmt und einer Stapelhalteeinrichtung zuführt, die den Stapel der Aufgussbeutel mit einer Stapelachse hält, die der Horizontalen entspricht.

Eine alternative Lösung ist aus DE 10 2015 115 732 A1 bekannt. Bei diesem Stand der Technik werden Aufgussbeutel auf einer sich horizontal erstreckenden Herstellungsstrecke durch Schneiden eines die Umhüllung des aufgussfähigen Materials bildenden Beutelmaterials vereinzelt. Unmittelbar hinter der entsprechenden Schneidvorrichtung fallen die einzelnen Aufgussbeutel in eine drehbar gelagerte Aufnahme. Von dort wird der einzelne Beutel über einen Stempel in ein Magazin überführt, das unterhalb der Aufnahme angeordnet ist und in dem die Beutel mit einer Stapelachse in vertikaler Richtung übereinander abgelegt werden. Die Aufnahme hat Keilflächen, über welche der abgeworfene Aufgussbeutel innerhalb der Aufnahme zentriert wird. Unterhalb der Aufnahme sind Schieber vorgesehen, die die Unterseite der Aufnahme verschließen, um ein unbeabsichtigtes Herausfallen der Aufgussbeutel aus der Aufnahme zu verhindern, und die synchron mit dem vorfahrenden Stempel geöffnet werden.

Bei diesem Stand der Technik dient die Aufnahme auch als Zwischenspeicher für abgeworfene Aufgussbeutel für den Fall, dass das Magazin nicht unterhalb der Aufnahme vorgesehen ist und der dort gestapelte Verpackungsstapel aus dem Magazin entnommen wird. In diesem Fall sind die Schieber zusammengefahren und verschließen die untere Öffnung der Aufnahme.

Gemäß EP 3 431 400 A1 wird eine Kette zusammenhängender Aufgussbeutel über ein Sternrad nach je zwei Aufgussbeutel gefaltet, sodass je zwei Aufgussbeutel gegen zwei vorangegangene Aufgussbeutel angelegt werden, und in dieser Weise einem horizontalen Stapelschacht in Form von Verpackungsstapeln überführt. Die einzelnen Verpackungsstapel werden durch Zinken, die von umlaufenden und einen Stapelschacht seitlich begrenzenden Bändern mitgenommen werden, in dem Stapelschacht vorgetrieben und einem Schieber zugeführt, der den Verpackungsstapel in eine Kartonverpackung überführt.

Die vorbekannten Lösungen lassen noch Wünsche offen.

Der vorliegenden Erfindung liegt die Aufgabe zugrunde, eine Vorrichtung zum Ausbilden von Verpackungsstapeln enthaltend Aufgussbeutel anzugeben, die kompakt bauend ist und eine einfache und verlässliche Stapelung von Aufgussbeuteln erlaubt. Das Verfahren soll rasch das Ausbilden von Verpackungsstapeln durch Stapeln von Aufgussbeuteln erlauben und sich dementsprechend ökonomisch und raumsparend durchführen lassen.

Zur Lösung des verfahrensmäßigen Aspekts des obigen Problems wird mit der vorliegenden Erfindung ein Verfahren mit den Merkmalen von Anspruch 1 angegeben. Die erfindungsgemäße Vorrichtung ist in Anspruch 6 definiert.

Bei dem erfindungsgemäßen Verfahren wird der einzelne Aufgussbeutel im Rahmen der Entnahmebewegung von der Förderstrecke zur Bildung des Verpackungsstapels in einer Stapelhalteeinrichtung angeordnet. Dementsprechend erfolgt die Übergabe des Aufgussbeutels unmittelbar von der Förderstrecke in die Stapelhalteeinrichtung. Die Förderstrecke ist dabei diejenige Strecke, die den fertigen Aufgussbeutel von der Beutelherstellungseinrichtung ausschleust und unmittelbar einer Entnahmestation zuführt, in welcher der Aufgussbeutel von der Förderstrecke, die üblicherweise durch ein Förderband gebildet ist, entnommen wird. Das Entnehmen erfolgt dabei durch eine Entnahmeeinrichtung, die auf den Aufgussbeutel einwirkt, um diesen in die Stapelhalteeinrichtung einzubringen. Die Entnahmeeinrichtung wird dabei regelmäßig auch das Stapeln der Beutel in der Stapelhalteeinrichtung bewirken.

Wie bei den aus dem Stand der Technik bekannten Lösungen ist die Stapelhalteeinrichtung zumindest teilwiese beweglich, um diese von einer Stapelposition in eine Ausbringposition zu überführen, in welcher der Verpackungsstapel aus der Stapelhalteeinrichtung entnommen wird. Der Verpackungsstapel besteht dabei aus einer vorbestimmten Anzahl von Aufgussbeuteln. Die hintereinander hergestellten Verpackungsstapel bestehen jeweils aus einer identischen Anzahl von Aufgussbeuteln.

Bei der erfindungsgemäßen Lösung kann die Entnahmeeinrichtung mit einem Zähler und einem Sensor versehen sein, der mit einer Steuerung zu der Entnahmeeinrichtung datenmäßig verbunden ist, um die Entnahmeeinrichtung nur dann zu aktivieren, wenn tatsächlich ein Aufnahmeplatz auf der Förderstrecke mit einem fertiggestellten Aufgussbeutel belegt ist. So kann das Signal des Sensors und/oder die Betätigung der Entnahmeeinrichtung als Zähler für diejenigen Aufgussbeutel Eingang in eine Maschinensteuerung dienen, mit dem der Verpackungsstapel komplettiert und somit die Stapelhalteeinrichtung von der Stapelposition zur Entleerung in die Ausbringposition überführt wird.

Ebenso kann eine Einrichtung vorgesehen sein, die einen schadhaften, beispielsweise auf der Förderstrecke befindlichen Aufgussbeutel erkennt und die Aktivierung der Entnahmeeinrichtung unterlässt, wenn dieser schadhafte Beutel die Entnahmestation passiert. So wird verhindert, dass der schadhafte Beutel Teil des Verpackungsstapels wird.

Bei dem erfindungsgemäßen Verfahren wird jedenfalls der fertig hergestellte Beutel von der dies bewirkenden Beutelherstellungseinrichtung unmittelbar über die eine Förderstrecke der Entnahmestation zugeführt, wo der Aufgussbeutel von der Förderstrecke entnommen wird. Das Entnehmen erfolgt in vorbestimmter kontrollierter Weise durch die Entnahmeeinrichtung. Das Verbringen des Beutels im Rahmen der Entnahmebewegung unmittelbar in die Stapelhalteeinrichtung verkürzt die Bewegungsbahnen. Dabei wird der Aufgussbeutel nach dem Entnehmen von der Förderstrecke nur einmal gehandhabt, um diesen in die Stapelhalteeinrichtung zu überführen.

In Abkehr von dem Verfahren nach DE 102015 115 732 A1, bei welchem der Aufgussbeutel unter Schwerkraftwirkung von der Förderstrecke nach unten in die Aufnahme fällt, wird gemäß der vorliegenden Erfindung der Aufgussbeutel von der Förderstrecke angehoben und in die Stapelhalteeinrichtung überführt. Die dabei aktive Entnahmeeinrichtung zwingt dem Aufgussbeutel dementsprechend eine fest vorgegebene und durch die Bewegung der Entnahmeeinrichtung bestimmte Bewegungsbahn auf. So ist die Bewegungsbahn entgegen dem Stand der Technik DE 10 2015 115 732 A1 nicht von verschiedenen Faktoren wie dem Gewicht des Aufgussbeutels bzw. der Geschwindigkeit des Förderbandes abhängig.

Das Verfahren nach der vorliegenden Erfindung erweist sich danach als zeit- und raumsparend. Gegenüber dem Stand der Technik werden weniger Anlagenkomponenten benötigt, um einen Verpackungsstapel zu bilden.

Die erfindungsgemäße Lösung trägt auch den Platzverhältnissen in verbesserter Weise Rechnung, die üblicherweise benachbart zu der Beutelherstellungseinrichtung vorgesehen sind. Durch das Heben des Aufgussbeutels wird der Verpackungsstapel mit größerem Abstand zu der Aufstellfläche bereitgestellt, auf der die Beutelherstellungseinrichtung aufgestellt ist, was dem Bedürfnis nach einem ergonomischen Arbeiten des Bedienpersonals entgegenkommt.

Bei einer bevorzugten Verfahrensführung wird der einzelne Aufgussbeutel mittels eines Stapelhubes in einen Zwischenspeicherschacht eines Zwischenspeichers überführt. Dieser Zwischenspeicherschacht ist typischerweise Teil der Stapelhalteeinrichtung. Der Zwischenspeicherschacht kann ortsfest vorgesehen sein. Er fluchtet mit einem Kassettenspeicherschacht, der typischerweise so ausgebildet ist, dass er den Verpackungsstapel insgesamt aufnehmen kann.

Bei der bevorzugten Verfahrensführung wird ein den Verpackungsstapel vervollständigender Aufgussbeutel in einem Überführungshub von der Förderstrecke abgehoben. Dieser Überführungshub ist größer als ein Stapelhub. Jeder Stapelhub ist üblicherweise gleich dimensioniert und zwar derart, dass der von der Förderstrecke abgehobene Aufgussbeutel bis in den Zwischenspeicherschacht gelangt und den oder die bereits dort befindlichen Aufgussbeutel entgegen der Schwerkraft nach oben drückt. Bei dem Überführungshub wird der den Verpackungsstapel vervollständigen Aufgussbeutel zunächst den übrigen Aufgussbeuteln der Stapelung innerhalb des Zwischenspeichers zugeführt. In einer gleichförmigen Bewegung wird dabei der so vervollständigte Verpackungsstapel in den Kassettenspeicherschacht überführt. Damit wird der Zwischenspeicherschacht entleert, und sämtliche bisher gestapelten Aufgussbeutel, die den Verpackungsstapel bilden, werden in dem Kassettenspeicherschacht platziert. Der Kassettenspeicherschacht dient der Überführung des Verpackungsstapels zum Verpacken desselben in einer Kartonverpackung. Wie zuvor erwähnt, kann der Kassettenspeicherschacht beweglich zwischen der zuvor beschriebenen Stapelposition sein, bei welcher der Kassettenspeicherschacht mit dem Zwischenspeicherschacht fluchtet, und der Ausbringposition. Üblicherweise ist die Kassette dazu schwenkbar gelagert.

Bei der bevorzugten Verfahrensführung folgt dem Überführungshub ein Stapelhub, mit dem ein auf der Förderstrecke nachfolgender Aufgussbeutel in den Zwischenspeicher überführt wird, während gleichzeitig die Kassette üblicherweise über die Dauer mehrerer Stapelhübe entleert wird, um den Verpackungsstapel beispielsweise in eine Kartonverpackung zu überführen.

Das erfindungsgemäße Verfahren lässt sich besonders ökonomisch und effektiv durch rasche Bewegungen, insbesondere der Entnahmeeinrichtung durchführen. Im Hinblick darauf ist es zu bevorzugen, die Bewegung des Aufgussbeutels innerhalb der Stapelhalteeinrichtung rasch abzubremsen, sodass die Entnahmeeinrichtung zügig für den nächsten Hub bereitgestellt und ein geordnetes Stapeln der einzelnen Aufgussbeutel in der Stapelhalteeinrichtung gewährleistet werden kann. Im Hinblick darauf erfolgt das Stapeln der Aufgussbeutel bevorzugt gegen einen Widerstand eines Widerstandselements, welches in der Stapelhalteeinrichtung beweglich ist. Dieses bewegliche Widerstandselement bremst den Aufgussbeutel ab und sorgt für ein geordnetes Gegeneinanderlegen der einzelnen Aufgussbeutel innerhalb der Stapelhalteeinrichtung.

Die erfindungsgemäße Vorrichtung hat üblicherweise in an sich bekannter Weise eine Beutelherstellungseinrichtung, in welcher loses aufbrühfähiges Material, wie insbesondere Tee, in einem Beutel aus wasserdurchlässigen Material unter Bildung des Aufgussbeutels eingeschlossen wird. Üblicherweise wird mit dem Beutel über einen Faden ein Etikett verbunden. Das Etikett wird üblicherweise an den Beutel gesichert. Der Beutel kann zusätzlich mit einer Aromaverpackung versehen werden. Eine solche Beutelherstellungseinrichtung ist beispielsweise aus EP 4 046 923 A1 bekannt.

Die fertiggestellten und gegebenenfalls mit einer Aromapackung versehenen Aufgussbeutel werden von dieser Beutelherstellungseinrichtung über eine Förderstrecke, die üblicherweise durch ein umlaufendes Förderband gebildet wird, zu einer Entnahmestation gefördert. Dieser Entnahmestation ist eine Entnahmeeinrichtung zugeordnet. Die erfindungsgemäße Vorrichtung hat ferner eine Stapelhalteeinrichtung zum Halten einer Stapelung von Aufgussbeuteln. Die Entnahmeeinrichtung ist zum Verbringen eines einzelnen Aufgussbeutels von der Förderstrecke zu der Stapelhalteeinrichtung angepasst ausgebildet.

Bei der erfindungsgemäßen Lösung hat die Entnahmeeinrichtung eine in vertikaler Richtung geführt bewegliche Einstoßeinrichtung, bevorzugt mit beiderseits der Förderstrecke vorgesehenen Einstößern. Die Einstoßeinrichtung ist bzw. die Einstößer sind von einer Ausgangslage auf Höhe der Förderstrecke zum Einbringen eines Aufgussbeutels in die Stapelhalteeinrichtung beweglich. Diese Stapelhalteeinrichtung befindet sich oberhalb der Förderstrecke. Der insofern von der Entnahmeeinrichtung bewegte Aufgussbeutel liegt üblicherweise auf beiden Einstößern auf, d.h. er wird beiderseits der Förderstrecke jeweils kontaktiert und von der Förderstrecke abgehoben und in Richtung auf die Stapelhalteeinrichtung überführt. Diese Position der Entnahmeeinrichtung wird als Einbringlage bezeichnet. In der Einbringlage ist der Aufgussbeutel so weit angehoben, dass er in die Stapelhalteeinrichtung eingebracht ist.

Die Einstößer der Vorrichtung nehmen dementsprechend die Förderstrecke üblicherweise zwischen sich auf. Jeder der Einstößer ist üblicherweise über längliche Stützen abgestützt, die an einem gemeinsamen Schlitten montiert sein können, der vertikal beweglich angetrieben ist und auch in der Einbringlage unterhalb der Förderstrecke verbleibt. Auf diese Weise wird eine synchrone Betätigung der Einstößer auf einfache Weise und auch eine jeweils höhengleiche Anordnung der einzelnen Einstößer sichergestellt.

Bei dem erfindungsgemäßen Vorgehen wird der Aufgussbeutel üblicherweise allein vertikal bewegt. Die Einstößer haben dazu eine sich üblicherweise allein in der Horizontalen erstreckende Auflagefläche für den Aufgussbeutel. Das die Förderstrecke bevorzugt ausbildende Förderband wird üblicherweise kontinuierlich bewegt. Der von der Förderstrecke abgehobene Aufgussbeutel wird üblicherweise durch einen Anschlag des Einstößers abgebremst, der die Auflagefläche begrenzt und gegen den der Aufgussbeutel anstößt, wenn sich der Einstößer in der Ausgangslage befindet.

Im Hinblick auf die Möglichkeit, als fehlerhaft identifizierte Aufgussbeutel auszuschleusen und einer Stapelung zu entziehen, ist der Einstößer bevorzugt in eine Ausschusslage verbringbar, in der ein auf der Förderstrecke bewegter Aufgussbeutel über die Einstößer hinweg bewegt werden kann, ohne dass die Anschläge gegen den Aufgussbeutel anschlagen. So kann der fehlerhafte Aufgussbeutel über die Einstößer hinweg gefördert und durch die Bewegung der Förderstrecke aus der Vorrichtung ausgefördert werden. Der fehlerhafte Aufgussbeutel kann beispielsweise an einem Umlenkpunkt eines Förderbandes von der Förderstrecke abgeworfen werden.

Gemäß einer bevorzugten Weiterbildung der vorliegenden Erfindung hat die Stapelhalteeinrichtung im Bereich ihrer Einbringöffnung einander gegenüberliegende Klinken. Diese sind verschwenkbar an einem Stapelschacht gelagert und üblicherweise federvorgespannt in einer Haltelage festgelegt. In dieser Haltelage bilden die Klinken jeweils eine Auflagefläche für den untersten Aufgussbeutel innerhalb der Stapelhalteeinrichtung aus.

Die Klinken haben an ihrer der Förderstrecke zugewandt Unterseite aufeinander zu gerichtete Trichterflächen. Durch diese Trichterflächen werden die Klinken beim Einbringen des Aufgussbeutels in den Stapelschacht durch den Aufgussbeutel oder zumindest eine Fläche der Entnahmeeinrichtung nach außen verschwenkt. Aufgrund der Federvorspannung werden die Klinken danach in die Haltelage zurückverschwenkt, sodass der zuletzt in den Stapelschacht eingebrachte Aufgussbeutel durch die Auflageflächen der Klinken am Herausfallen aus dem Stapelschacht gehindert wird. So halten die Klinken den mit dem Stapelhub überführten Ausgussbeutel bzw. den untersten Beutel der mit dem Überführungshub in die Kassette verbachten Stapelung in dem entsprechenden Schacht fest, während die Einstoßeinrichtung nach dem Stapelhub bzw. nach dem Überführungshub aus dem jeweiligen Schacht in Richtung auf die Förderstrecke abgesenkt wird.

Es versteht sich, dass die Klinken bevorzugt um eine Achse schwenkbar sind, die sich parallel zu den länglichen Einstößern erstreckt.

Wie bereits unter Verweis auf die verfahrensmäßigen Ansprüche dargelegt, kann die Stapelhalteeinrichtung bevorzugt einen Zwischenspeicher mit einem zur Aufnahme einer Stapelung von Aufgussbeutel ausgebildeten Zwischenspeicherschacht aufweisen. Auf der der Förderstrecke abgewandten Seite des Zwischenspeicherschachtes ist bei dieser Weiterbildung eine Kassette mit einem zur Aufnahme einer Stapelung von Aufgussbeutel ausgebildeten Kassettenspeicherschacht vorgesehen. Der Kassettenspeicherschacht ist zumindest zur Speicherung einer den fertigen Verpackungsstapel bildenden Anzahl von Aufgussbeuteln ausgebildet.

Die Kassette ist zwischen einer Stapelposition, in der der Zwischenspeicherschacht mit dem Kassettenspeicherschacht fluchtet, und einer Ausbringposition, in der die Stapelung aus der Kassette ausgenommen wird, beweglich. In dieser Ausbringposition fluchtet der Kassettenspeicherschacht in der Regel nicht mit den Zwischenspeicherschacht. Denn die Kassette ist üblicherweise in die Ausbringposition von einer vertikalen Ausrichtung des Kassettenspeicherschachtes in eine im wesentlichen horizontale Ausrichtung desselben schwenkbar. So kann eine Seitenfläche des Kassettenspeicherschachtes genutzt werden, den Verpackungsstapel beim Ausbringen aus der Kassette solide abzustützen und zu führen.

Die Klinken sind üblicherweise sowohl im Öffnungsbereich des Zwischenspeicherschachtes wie auch in dem Öffnungsbereich des Kassettenspeicherschachtes vorgesehen. Die Klinken können zum Öffnen bzw. Schließen der Einbringöffnung elektrisch oder pneumatisch angetrieben oder festlegbar sein.

Die Klinken, insbesondere die Klinken des Kassettenspeicherschachtes sind bevorzugt in der Haltelage festlegbar, beispielsweise über einen aktivierbaren pneumatischen Zylinder. Durch Festlegung der Klinken in der Haltelage wird verhindert, dass sich die Klinken beim Überführen der Kassette in die Ausbringposition aus der Haltelage entfernen. So wird der Verpackungsstapel sicher in dem Kassettenspeicherschacht eingeschlossen.

Das im Hinblick auf die erfindungsgemäße Verfahrensführung bereits diskutierte Widerstandselement kann beispielsweise durch einen Schlitten gebildet sein, der in einem Schacht der Stapelhalteeinrichtung, insbesondere dem Kassettenspeicherschacht, verschieblich gelagert ist. Dessen Gewichtskraft bremst die Bewegung der Aufgussbeutel beim Überführen des Verpackungsstapels in den Kassettenspeicherschacht ab und hält auch die einzelnen Aufgussbeutel in kompakter Stapelung beim Überführen der Kassette in die Ausbringposition.

Ein entsprechendes Widerstandselement kann auch durch einen Niederhalter gebildet sein, der in einen Schacht der Stapelhalteeinrichtung, insbesondere den Zwischenspeicherschacht, eingreift und der zwischen einer Niederhalteposition, in der der Niederhalter innerhalb des Schachtes gegen die Stapelung dort einwirkt, und einer Ruheposition, in der der Niederhalter außerhalb des Schachtes vorgesehen ist, beweglich sein kann. Dieser Niederhalter wird üblicherweise vor dem Ausüben des Überführungshubes aus dem Zwischenspeicherschacht herausgeführt. Der Niederhalter kann zumindest einen in den Zwischenspeicherschacht eingreifenden Zinken aufweisen, der über einen Parallelogrammaufbau höhenverschieblich, indes innerhalb des Schachtes parallel zu der Oberfläche des obersten Aufgussbeutels vorgesehen ist. Dieser Zinken kann allein aufgrund des Eigengewichtes als Widerstandselement wirken. Der Parallelogrammaufbau kann einen Dämpfer aufweisen, der die Verschwenkbewegung der Gelenkarme des Parallelogrammaufbaus dämpft.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
Fig. 1 eine leicht perspektivische Draufsicht einer Bedienseite eines Ausführungsbeispiels einer Beutelherstellungseinrichtung mit einer Vorrichtung zum Ausbilden von Verpackungsstapeln;
Fig. 2 eine Seitenansicht einer Entnahmeeinrichtung des Ausführungsbeispiels in einer Ausgangslage;
Fig. 3 die Entnahmeeinrichtung gemäß Figur 2 in einer Einbringlage;
Fig. 4 eine perspektivische Seitenansicht eines Zwischenspeichers des Ausführungsbeispiels, wobei ein Gehäuses des Zwischenspeichers zu besseren Darstellung von Klinken lediglich mit seinen Konturen gestrichelt dargestellt ist;
Fig. 5 eine perspektivische Seitenansicht eines Zwischenspeichers des Ausführungsbeispiels;
Fig. 6 eine perspektivische Seitenansicht des Details gemäß Figur 5 mit dem Niederhalter des Ausführungsbeispiels in einer angehobenen Niederhalteposition, wobei eine oberhalb des Zwischenspeichers vorgesehene Kassette zu besseren Darstellung eines Niederhalters nicht dargestellt ist;
Fig. 7 eine perspektivische Seitenansicht der Kassette des Ausführungsbeispiels, wobei ein Gehäuse der Kassette zu besseren Darstellung eines Schlittens lediglich mit seinen Konturen gestrichelt dargestellt ist;
Fig. 8 eine Seitenansicht zu Figur 6 mit dem Niederhalter in einer abgesenkten Niederhalteposition;
Fig. 9 eine Stirnseitenansicht zu Figur 8 mit der Entnahmeeinrichtung in einer Ausschusslage;
Fig. 10 eine Stirnseitenansicht gemäß Figur 9 mit der Entnahmeeinrichtung in der Einbringlage;
Fig. 11 eine Seitenansicht gemäß Figur 8 mit dem Niederhalter in einer angehobenen Niederhalteposition;
Fig. 12 eine Stirnseitenansicht zu Figur 11;
Fig. 13 eine Seitenansicht gemäß Figur 8 nach dem Überführen des Verpackungsstapels in die Kassette mit dem Niederhalter in einer abgesenkten Ruheposition;
Fig. 14 eine Stirnseitenansicht zu Figur 13;
Fig. 15 eine Seitenansicht gemäß Figur 13 vor dem Überführen des ersten Aufgussbeutels in den Zwischenspeicher mit dem Niederhalter in einer abgesenkten Ruheposition;
Fig. 16 eine Stirnseitenansicht zu Figur 15 und
Fig. 17 eine perspektivische Seitenansicht eines Ausführungsbeispiels eines Aufgussbeutels.

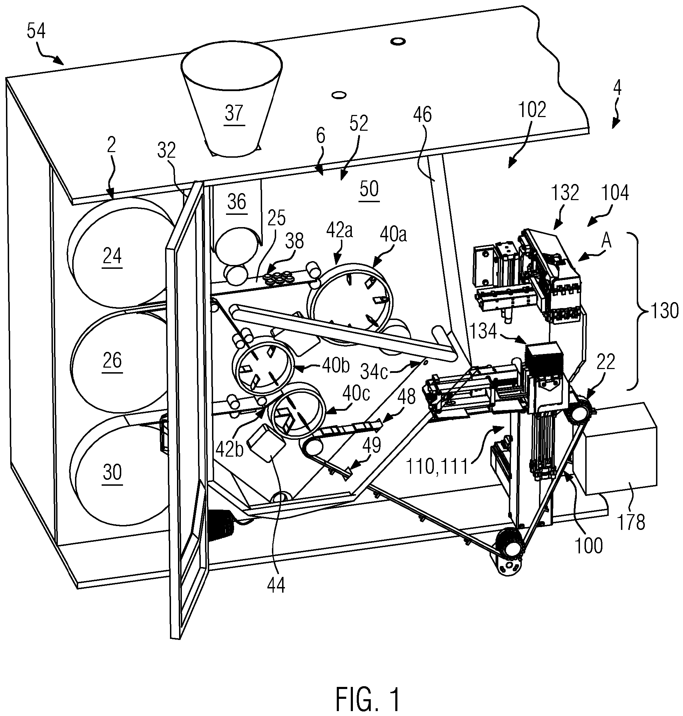

Figur 1 zeigt eine leicht perspektivische Draufsicht auf ein Ausführungsbeispiel einer Vorrichtung zur Herstellung von mit aufgussfähigem Material befüllten Aufgussbeuteln, die im wesentlichen drei Bereiche hat, nämlich einen Vorratsbereich 2 am linken Rand, einen Produktbereich 4 am rechten Rand und einen Arbeitsbereich 6 zwischen den Vorratsbereich 2 und dem Produktbereich 4.

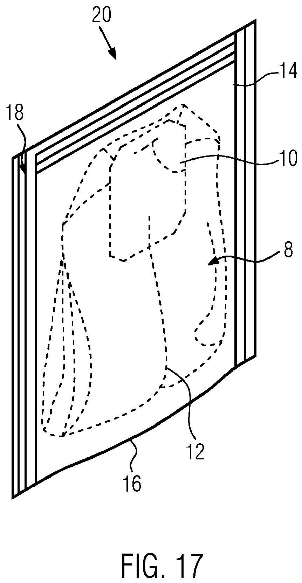

Die Herstellung der Beutel erfolgt durch Entnahme von Verbrauchsmaterial von dem Vorratsbereich 2, welches in dem Arbeitsbereich 6 zu Beuteln verarbeitet wird. Ein Beispiel für einen solchen Beutel ist in Figur 17 dargestellt. Dort ist der Beutel mit Bezugszeichen 8 gekennzeichnet. Bezugszeichen 10 kennzeichnet ein Etikett, welches über einen Faden 12 mit dem Beutel 8 verbunden ist. Die Einheit aus Beutel 8, Etikett 10 und Faden 12 ist in einer Aromaverpackung 14 aufgenommen, die durch ein feuchtigkeitsundurchlässiges Folienmaterial gebildet ist, das an einer Kante 16 um den Beutel 8 gelegt und durch eine U-förmige Schweißnaht 18 verschlossen ist.

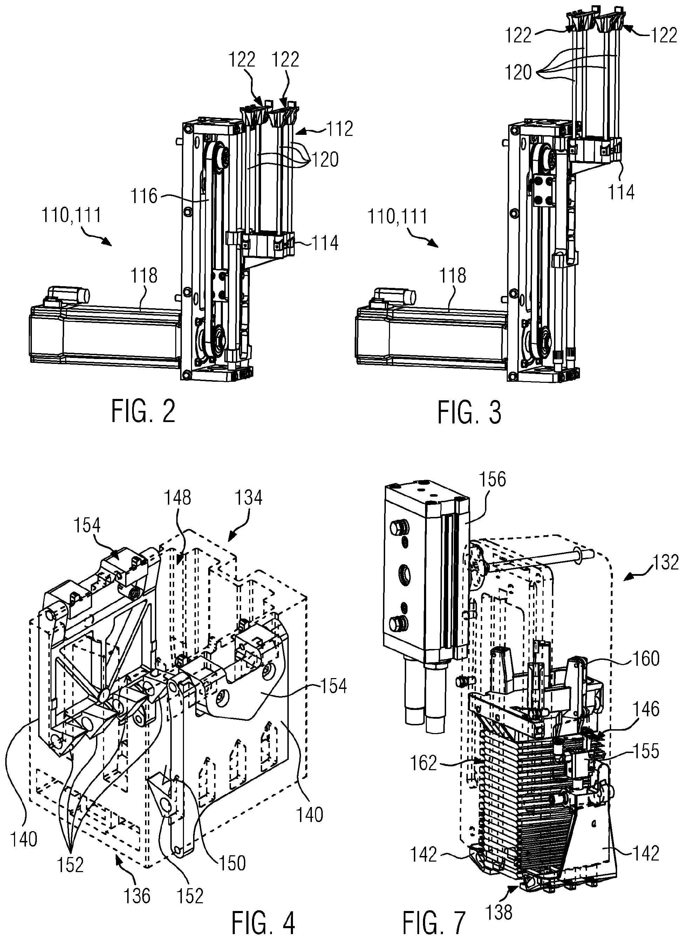

Das in Figur 17 gezeigte Produkt wird nachfolgend als fertiger Aufgussbeutel 20 bezeichnet. Der fertige Aufgussbeutel 20 wird über eine Förderstrecke 22 in Form eines schematisch dargestellten Förderbandes, zu dem Details den Figuren 2 ff. zu entnehmen sind, von dem Arbeitsbereich 6 zu dem Produktbereich 4 verbracht. Am Ende dieser Förderstrecke 22 befindet sich eine in Figur 1 rechts zu erkennende Entnahmestation104.

In dem Vorratsbereich 2 ist ein Vorrat 24 für Beutelmaterial 25, ein Vorrat 26 für die Etiketten 10, ein Vorrat 28 für den Faden 12 und ein Vorrat 30 für die Aromaverpackung 14 zu erkennen, die bei der Herstellung der fertigen Aufgussbeutel 20 als Verbrauchsmaterialien verwendet werden. Diese jeweiligen Verbrauchsmaterialien sind auf jeweils einer Rolle vorgesehen und werden im Rahmen der Herstellung davon abgerollt.

Der Vorratsbereich 2 weist Führungen für die einzelnen Bahnen des Verbrauchsmaterials auf. Das Verbrauchsmaterial wird zwischen dem Vorratsbereich 2 und dem Arbeitsbereich 6 durch eine erste Trennwand 32 hindurchgeführt. Diese Trennwand 32 hat Öffnungen für das Hindurchführen des jeweiligen Verbrauchsmaterials erlauben. In dem Arbeitsbereich 6 wird das Beutelmaterial 25 auf Höhe einer Portioniereinrichtung 36 mit einem Vorrat 37 für aufgussfähiges Material jeweils mit einer Charge des aufgussfähigen Materials belegt. Dabei wird das Beutelmaterial 25 auf einer horizontalen Strecke 38 geführt. Nach den Belegen des Beutelmaterials 25 wird dieses zu einem Schlauch unter Einschluss der Charge umgeformt. Das als Endlosmaterial zugeförderte Beutelmaterial 25 wird zu Längenstücken geschnitten und damit vereinzelt. Am Ende der horizontalen Strecke 38 werden die so vorbereiteten Längenstücks des Beutelmaterials 25 einem ersten Transportrad 40a übergeben.

Auf Höhe einer Einbringstation 42a wird das Beutelmaterial 25 zur Ausbildung des als Doppelkammerbeutel ausgebildeten Beutels 8 radial nach innen in Richtung der Mittellängs- bzw. Drehachse des ersten Transportrades 40a verbracht. Das erste Transportrad 40a dreht im Uhrzeigersinn und führt das jeweilige Beutelmaterial 25 verschiedenen Stationen zu, in denen der Beutel kopfseitig verschlossen, mit dem Faden 12 und dem Etikett 10 verbunden wird.

Von dem ersten Transportrad 40a wird der so erstellte und kopfseitig bearbeitete Beutel 8 auf ein im Gegenuhrzeigersinn drehendes zweites Transportrad 40b überführt, wobei der Beutel 8 zwischen den beiden Transporträdern 40a, 40b verschwenkt wird, sodass der Beutel 8 mit seinem Boden zuerst in radialer Richtung in das zweite Transportrad 40b eingebracht wird. Dort wird der Beutel 8 mit dem Etikett 10 verbunden und so innerhalb des zweiten Transportrades 40b gedreht, dass der beim Einbringen radial nach innen orientierte Boden des Beutels 8 radial nach außen orientiert ist. In dieser Ausrichtung, d.h. um 180 ° gegenüber der Einbringrichtung verschwenkt, wird der so vorbereitete Beutel 8 mit dem Boden nach vorne aus dem zweiten Transportrad 40b ausgefördert und einem dritten Transportrad 40c zugeführt. Dabei wird der Beutel an einer Umhüllungsstation 42b zugeführt, in welcher die Aromaverpackung 14 bei Ausbildung der Kante 16 um den Beutel 8 sowie das Etikett 10 und dem Faden 12 gelegt wird. Danach erfolgt das Versiegeln der Aromaverpackung 14 in einer schematisch angedeuteten Siegelstation 44 unter Ausbildung der U-förmigen Naht 18 gemäß Figur 17. Die Siegelstation 44 ist einem dritten Transportrad 40c zugeordnet, an welchem der Beutel 8 beim Versiegeln gehalten und transportiert wird.

Der so hergestellte fertige Beutel 20 wird schließlich auf die Förderstrecke 22 gelegt und dem Produktbereich 4 zugeführt. Dazu weist eine zweite Trennwand 46 eine Beuteldurchführöffnung 48 und eine Rückführöffnung 49 für die Förderstrecke 22 auf.

Die zuvor als Teil des Arbeitsbereiches 6 beschriebenen Komponenten liegen vor einer Basisplatte 50, die die einzelnen Komponenten trägt und diese ggf. von Antrieben trennt, die auf der gegenüberliegenden Seite der Basisplatte 50 vorgesehen sind. Der dem Benutzer zugewandte Bereich der Basisplatte 50 trennt eine dort vorgesehene Bedienseite 52 von einer Antriebsseite 54 an der Rückseite der Vorrichtung.

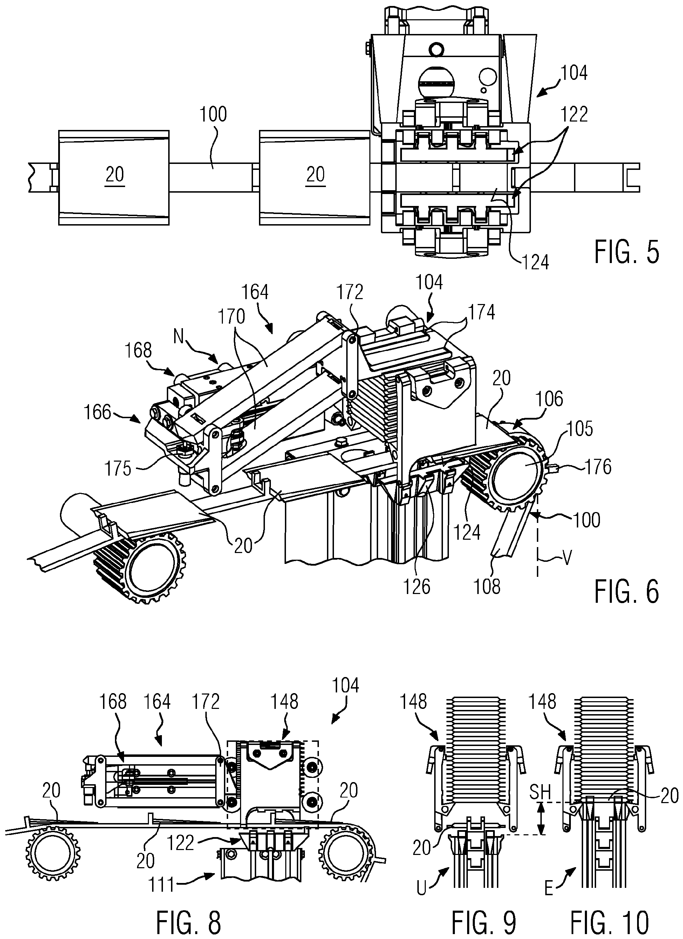

Die Figuren 5 und 6 zeigen Teile eines die Transportstrecke 22 nach Figur 1 ausbildenden Förderbandes 100, welches eine in Figur 1 mit Bezugszeichen 102 gekennzeichnete Beutelherstellungseinrichtung mit der Entnahmestation 104 verbindet. In der Entnahmestation 104 wird das Förderband 100 über ein Umlenkrad 105 umgelenkt, so dass ein mit Bezugszeichen 106 gekennzeichneter, sich im Wesentlichen horizontal erstreckender Abschnitt des Förderbandes 100 nach unten umgelenkt wird. Der hinter dem Umlenkrad 105 in Förderrichtung vorgesehene umgelenkte Abschnitt 108 ist über die Vertikale hinaus umgelenkt, die in Figur 6 mit Bezugszeichen V gekennzeichnet ist.

In Richtung dieser Vertikalen V unterhalb des Förderbandes 100 sind die ortsfest montierten Elemente einer Entnahmeeinrichtung 110 vorgesehen, die im Detail in den Figuren 2 und 3 dargestellt sind. Diese Entnahmeeinrichtung 110 hat eine Einstoßeinrichtung 111 mit einer Einstößerführung 112, welche einen Schlitten 114 in vertikaler Richtung führt, der über einen umlaufenden Zahnriemen 116 mit der Welle eines Servomotors 118 trieblich gekoppelt ist. Der Schlitten 114 trägt Stützen 120. Jeweils zwei der Stützen 120 tragen einen einzigen Einstößer 122. Diese Einstößer 122 hat eine ebene Auflagefläche 124 und einen dieser in Bewegungsrichtung des Förderbandes nachgelagerten Anschlag 126.

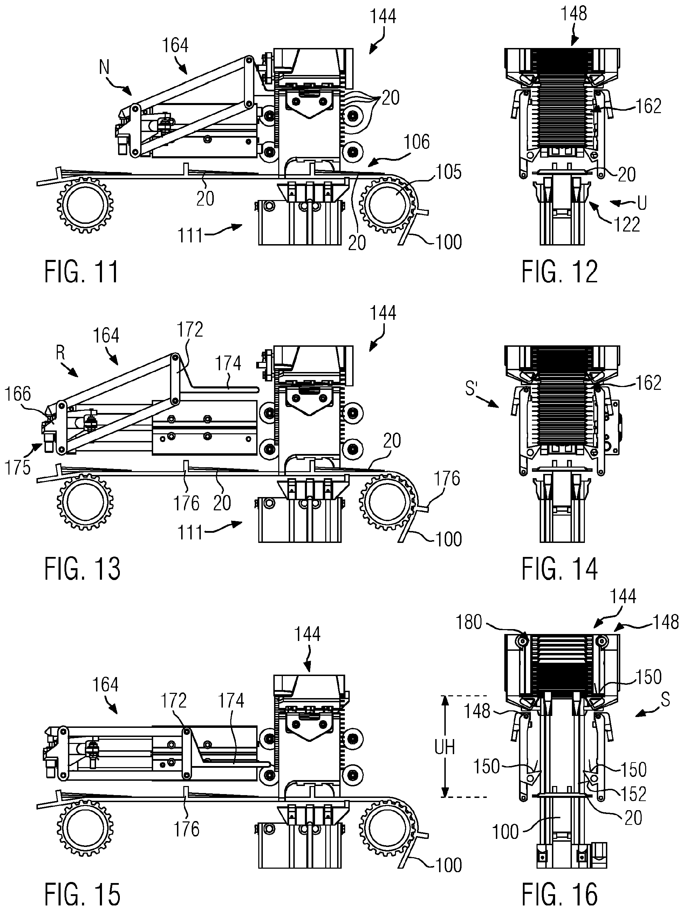

Wie Figur 1 vermittelt, liegt auf der der Entnahmeeinrichtung 110 gegenüberliegenden Seite des Förderbandes 100 eine Stapelhalteeinrichtung 130, die eine Kassette 132 und einen Zwischenspeicher 134 umfasst. In Figur 1 ist die Kassette 132 in ihrer Ausbringposition A gezeigt, in welcher die Kassette 132 um 90 Grad in die horizontale gegenüber einer Stapelposition S verschwenkt ist, die in Figur 7 dargestellt ist und in welcher die Kassette 132 unmittelbar an den Zwischenspeicher 134 anschließt und mit diesem fluchtet (vgl. Figuren 12, 14, 16).

Details des Zwischenspeichers 134 sind der Figur 4 zu entnehmen; Details der Kassette 132 der Figur 7. Diese Teile der Stapelhalteeinrichtung 130 haben jeweils an ihrer jeweiligen Einbringöffnung 136, 138 verschwenkbar gelagerte Klinken 140, 142, die den Zugang zu einem Stapelschacht 144 bilden. Wie die Figuren 15 und 16 vermitteln wird dieser Stapelschacht 144 zum Teil durch einen Kassettenspeicherschacht 146 der Kassette 132 und zum Teil durch einen Zwischenspeicherschacht 148 des Zwischenspeichers 134 gebildet.

In der in den Figuren 11 bis 16 gezeigten Stapelposition S fluchtet der Kassettenspeicherschacht 146 mit dem Zwischenspeicherschacht 148.

Die Klinken 140 bzw. 142 sind jeweils derart über eine Feder vorgespannt, dass von gegenüberliegenden Klinken 140; 142 jeweils gebildete Auflageflächen 150 den entsprechenden Schacht 146, 148 unterseitig begrenzen, wohingegen der lichte Abstand der Klinken 140; 142 im Bereich der Einbringöffnung 136, 138 kleiner als die entsprechende Breite des Aufgussbeutels 20 ist. Die Klinken 140, 142 haben jeweils an ihrer dem Förderband 100 zugewandten Unterseite aufeinander zu gerichtete Trichterflächen 152.

Die Federvorspannung erfolgt beispielsweise bei den Klinken 140 des Zwischenspeichers 134 durch Federelemente, die zwischen der Außenfläche der Klinke 140 und einem dazu vorgesehenen Federhalter 154 vorgesehen sind (vgl. Fig. 4). Die Klinken 142 der Kassette 132 sind zudem noch in ihrer Haltelage festlegbar, wozu ein pneumatischer Stößel 155 vorgesehen ist, der bei Aktivierung auf die Klinke 142 wirkt und diese in der den Kassettenspeicherschacht 146 verschließenden Stellung festgelegt. Dadurch bleibt der Kassettenspeicherschacht 146 unterseitig durch die Klinken 142 so verengt, dass der unterste in dem Kassettenspeicherschacht 146 befindliche Aufgussbeutel 20 auf den Auflageflächen 150 aufliegt und nicht versehentlich aus dem Kassettenspeicherschacht 146 fallen kann. Diese Funktion ist insbesondere beim Überführen der Kassette von der Stapelposition S in die Ausbringposition A bedeutsam.

Für diese Bewegung ist bei dem gezeigten Ausführungsbeispiel die Kassette 132 über einen Schwenkantrieb 156 verschwenkbar, der eine Welle dreht, an der die Kassette 132 in ihrer Stapelposition S vertikal nach unten hängt; vergleiche Figur 7.

In dieser Figur ist auch ein Schlitten 160 zu erkennen, der in dem Kassettenspeicherschacht 146 frei verschieblich gelagert ist und dessen Gewichtskraft auf einer mit Bezugszeichen 162 gekennzeichneten Stapelung innerhalb des Kassettenspeicherschachtes 146 ruht. Dieser Schlitten 160 ist ein Beispiel eines Widerstandselements, welches einen in den Stapelschacht 144 eingebrachten Aufgussbeutel 20 beim Einbringen abbremst und die Stapelung 162 kompakt in dem Kassettenstapelschacht 146 hält.

Ein weiteres Beispiel für ein solches Widerstandselement ist in den Figuren 6 ff in Form eines Niederhalters 164 gezeigt. Der Niederhalter 164 hat ein Auflageelement 166, welches mit dem beweglichen Ende eines pneumatischen Zylinders 168 verbunden ist, sodass das Auflageelement 166 von einer Niederhalteposition N gemäß den Figuren 6, 8, 11 in eine Ruheposition R gemäß den Figuren 13, 15 beweglich ist. An dem Auflageelement 166 sind zwei Schwenkarme 170 eines Parallelogrammaufbaus verschwenkbar gelagert. An ihrem anderen Ende sind diese Schwenkarme 170 mit einem Verbindungselement 172 verbunden, von dem Zinken 174 abragen. In der Niederhalteposition N befinden sich diese Zinken 174 innerhalb des Speicherschachtes 148. In der Ruheposition R befinden sich die Zinken 174 seitlich neben dem Zwischenspeicherschacht 148; vergleiche Figur 13, 14. Das Anheben der Zinken 174 wird von einem Dämpfer 175 gedämpft.

Zum Ausbilden von Verpackungsstapeln mit dem gezeigten Ausführungsbeispiel werden von der Beutelherstellungseinrichtung 102 jeweils einzelne Aufgussbeutel 20 mit Abstand auf das Förderband 100 aufgelegt. Das Förderband 100 ist dazu in regelmäßigen Abständen mit Nocken 176 versehen, die den jeweiligen Aufgussbeutel 20 mitnehmen; vergleiche Figur 6. Auf dem Weg zu der Entnahmeeinrichtung 110 erfolgt eine visuelle Kontrolle des Aufgussbeutels 20. Wird dieser im Rahmen der Kontrolle für nicht gut befunden, verbleibt der Einstößer 120 in der insbesondere in Figur 12 deutlich zu erkennenden Ausschusslage U, bei welcher der Einstößer 122 insgesamt tiefer als der Aufgussbeutel 20 liegt. Der Beutel kann dementsprechend auch die Anschläge 126 passieren. Der fehlerhafte Aufgussbeutel 20 wird hinter dem Umlenkrad 105 von dem Förderband 100 in einen Sammelbehälter 178 abgeworfen. Ein solcher fehlerhafter Aufgussbeutel 20 ist in den Figuren 6, 8, 11 und 13 rechts und damit in Förderrichtung des Förderbandes 100 hinter der Entnahmestation 104 dargestellt.

Im Regelfall, in dem der Aufgussbeutel 20 die Endkontrolle passiert, wird der Einstößer 122 von dieser Ausschusslage U in eine demgegenüber leicht erhöhte Ausgangslage verbracht, in welcher der Einstößer 122 den Aufgussbeutel 20 von dem Förderband 100 abhebt. Aufgrund der horizontalen Bewegungsrichtung des Aufgussbeutels 20 auf dem horizontalen Abschnitt 106 des Förderbandes 100 schlägt der Aufgussbeutel 20 im Rahmen dessen gegen den Anschlag 126. Im Rahmen der Hubbewegung wird der Aufgussbeutel 20 in den Zwischenspeicherschacht 148 eingebracht. Die Klinken 140 werden dabei nach außen verschwenkt, sodass der Aufgussbeutel 20 in dem Zwischenspeicherschacht 148 aufgenommen werden kann. Dieser mit Bezugszeichen SH zwischen den Figuren 9 und 10 angedeutete Stapelhub zum Einbringen eines einzelnen Aufgussbeutels endet dabei üblicherweise unmittelbar nachdem der Aufgussbeutel 20 die Auflagefläche 150 der Klinken 140 des Zwischenspeicherschachtes 148 passiert hat. Von dieser obersten Lage wird der Einstößer 122 in die Ausschusslage U zurück verbracht, bevor der nächste Aufgussbeutel 20 über das Förderband 100 an der Entnahmestation 104 bereitgestellt wird.

Die Bewegung des Einstößers 122 erfolgt mit hoher Frequenz. So wird auch der Aufgussbeutel 20 mit hoher Geschwindigkeit in den Zwischenspeicherschacht 148 eingebracht. Zum Abbremsen und geordneten Ablegen und Stapeln der einzelnen Aufgussbeutel 20 befinden sich die Zinken 174 des Niederhalters 164 innerhalb des Zwischenspeicherschachtes 148 und in der Niederhalterposition.

Zu Beginn der Stapelung nimmt der Niederhalter 164 die in Figur 8 gezeigte abgesenkte Lage ein. Mit jedem in den Zwischenspeicherschacht 48 eingebrachten Aufgussbeutel werden auch die Zinken 174 angehoben. Neben dem Eigengewicht des Niederhalters 164 fördert auch der Dämpfer 175 ein geordnetes Stapeln der einzelnen Aufgussbeutel 20 in dem Zwischenspeicherschacht 148.

Die Figur 9 zeigt den Zwischenspeicherschacht 148 vor dem Einbringen des Aufgussbeutels 20, der dort noch auf dem Förderband 100 liegend dargestellt ist. Der Einstößer 122 befinde sich in der Ausschusslage U. Gemäß Figur 10 ist der Einstößer 122 mittels des Stapelhubes SH angehoben und befindet sich in seiner Einbringlage E in der Einbringöffnung 136 des Zwischenspeicherschachtes 148. Ersichtlich nehmen die beiden Einstößer 122 das Förderband 100 zumindest in dieser Einbringlage E zwischen sich auf.

Die Figuren 11 und 12 verdeutlichen das Anwachsen der Stapelung 162 in dem Zwischenspeicherschacht 148 bei gleichzeitigem Anheben des Niederhalters 164. Kurz vor Erreichen der einen Verpackungsstapel ausmachenden Anzahl an Aufgussbeuteln 20 wird der Niederhalter 164 von seiner in Figur 11 gezeigten Niederhalteposition N in die in Figur 13 gezeigte Ruheposition R horizontal durch Aktivieren des pneumatischen Zylinders 168 verschoben. Es folgt ein weiterer Hub des Einstößers zum Einbringen eines Aufgussbeutels in den Stapelschacht 144. Bei diesem weiteren Hub, mit dem der letzte Aufgussbeutel 20 zur Vervollständigung des Verpackungsstapels von dem Förderband 100 abgehoben wird, wird dieser letzte Aufgussbeutel 20 bis hinter die Klinken 142 des Kassettenspeicherschachtes 146 verbracht. Bei diesem mit Bezugszeichen UH zwischen den Figuren 15 und 16 angedeuteten Überführungshub wird die in dem Zwischenspeicherschacht 148 bis dahin angewachsene Stapelung 162 an Aufgussbeuteln 20 von dem noch einzubringenden Aufgussbeutel 20 angehoben, sodass der Verpackungsstapel insgesamt in einem Hub in den Kassettenspeicherschacht 146 eingebracht wird.

Die Figuren 13 bis 15 zeigen die Situation, bei welcher dieser letzte Aufgussbeutel 20 sich noch auf dem Förderband 100 befindet. Die Figur 16 verdeutlicht die Endlage der Einstößer 122 beim Überführungshub UH. Der Zwischenspeicherschacht 148 ist entleert. Sämtliche Aufgussbeutel 20 befinden sich als Verpackungsstapel 180 in dem Kassettenspeicherschachtes 146. Zwischen Figur 13 und Figur 15 haben sich die Zinken 174 aufgrund ihres Eigengewichts wieder in die abgesenkte Position begeben. Nach dem Überführungshub UH und dem Zurückziehen der Entnahmeeinrichtung 110 in die Ausschusslage U werden die Zinken 174 erneut in der Niederhalteposition N angeordnet, sodass der nächste Aufgussbeutel 20, der am Ende den obersten Aufgussbeutel des nachfolgend zu stapelnden Verpackungsstapels 180 bildet, gegen die Zinken 174 in der zuvor beschriebenen Weise in den Zwischenspeicherschacht 148 eingebracht wird.

Beim Überführen des Verpackungsstapels 180 in den Kassettenspeicherschacht 146 wird die Vertikalbewegung des Verpackungsstapels 180 durch den Schlitten 160 abgebremst. Dessen Gewichtskraft sorgt für eine kompakte Stapelung der einzelnen Aufgussbeutel 20 innerhalb des Verpackungsstapels 180.

Während weitere Aufgussbeutel 20 in dem Zwischenspeicherschacht 148 gestapelt werden, wird die Kassette 132 in die in Figur 1 gezeigt Ausbringposition verschwenkt. Der Verpackungsstapel 180 wird entnommen. Danach wird die Kassette 132 wieder in der Stapelposition S angeordnet.

Ersichtlich erfolgt unmittelbar nach dem Überführungshub UH ein neuer Stapelhub SH. Die einzelnen Stapelhube SH sind jeweils identisch. Sie sind so eingestellt, dass der neu der Stapelung 162 hinzuzufügende Aufgussbeutel 20 hinter die Auflagefläche 150 der Klinken 140 verbracht wird. Dieser neu der Stapelung 162 hinzuzufügende Aufgussbeutel 20 schiebt die Stapelung 162 in dem Zwischenspeicherschacht 148 weiter nach oben. Durch diesen reduzierten Weg der Entnahmeeinrichtung 110 zum vertikalen Anheben der einzelnen Aufgussbeutel 20 lässt sich der Verpackungsstapel 180 rasch und damit wirtschaftlich herstellen.

### Bezugszeichenliste

- 2: Vorratsbereich
- 4: Produktbereich
- 6: Arbeitsbereich
- 8: Beutel
- 10: Etikett
- 12: Faden
- 14: Aromaverpackung
- 16: Kante
- 18: Siegelnaht
- 20: Fertiger Aufgussbeutel
- 22: Förderstrecke
- 24: Vorrat für Beutelmaterial
- 25: Beutelmaterial
- 26: Vorrat für Etiketten 10
- 28: Vorrat für Faden 12
- 30: Vorrat für Aromaverpackung 14
- 32: Erste Trennwand
- 34a: Öffnung für Beutelmaterial
- 34b: Öffnung für Etiketten
- 34c: Öffnung für Faden
- 34d: Öffnung für Aromaverpackung
- 36: Portioniereinrichtung
- 37: Vorrat für aufgussfähiges Material
- 38: Horizontale Strecke
- 40a: erstesTransportrad
- 40b: zweites Transportrad
- 40c: drittes Transportrad
- 42a: Einbringstation
- 42b: Umhüllungsstation
- 44: Siegelstation
- 46: Zweite Trennwand
- 48: Beuteldurchführöffnung
- 49: Rückführöffnung
- 50: Basisplatte
- 52: Bedienseite
- 54: Antriebsseite
- 100: Förderband
- 102: Beutelherstellungseinrichtung
- 104: Entnahmestation
- 105: Umlenkrad
- 106: horizontaler Abschnitt
- 108: umgelenkter Abschnitt
- 110: Entnahmeeinrichtung
- 111: Einstoßeinrichtung
- 112: Einstößerführung
- 114: Schlitten
- 116: Zahnriemen
- 118: Servomotor
- 120: Stütze
- 122: Einstößer
- 124: Auflagefläche
- 126: Anschlag
- 130: Stapelhalteeinrichtung
- 132: Kassette
- 134: Zwischenspeicher
- 136: Einbringöffnung
- 138: Einbringöffnung
- 140: Klinke
- 142: Klinke
- 144: Stapelschacht
- 146: Kassettenspeicherschacht
- 148: Zwischenspeicherschacht
- 150: Auflagefläche
- 152: Trichterfäche
- 154: Federhalter
- 155: Stößel
- 156: Schwenkantrieb
- 160: Schlitten
- 162: Stapelung
- 164: Niederhalter
- 166: Auflagerelement
- 168: pneumatische Zylinder
- 170: Schwenkarm
- 172: Verbindungselement
- 174: Zinke
- 175: Dämpfer
- 176: Nocken
- 178: Sammelbehälter
- 180: Verpackungsstapel

- A: Ausbringposition
- E: Einbringlage
- F: Förderrichtung
- N: Niederhalteposition
- R: Ruheposition
- S: Stapelposition
- SH: Stapelhub
- U: Ausschusslage
- UH: Überführungshub
- V: Vertikale

## Patentansprüche

1. Verfahren zum Ausbilden von Verpackungsstapeln (180) durch Stapeln von Aufgussbeuteln (20), bei dem ein einzelner Aufgussbeutel (20) von einer Förderstrecke (22; 100) entnommen wird, auf welcher einzelne Aufgussbeutel (20) mit Abstand zueinander und hintereinander vorgesehen einer Entnahmestation (104) zugeführt werden, in der die Aufgussbeutel (20) zur Bildung des Verpackungsstapels (180) in einer Stapelhalteeinrichtung (130) gegeneinander anliegend angeordnet werden, die bei Erreichen einer den Verpackungsstapel (180) ausbildenden Anzahl von Aufgussbeuteln (20) entleert wird, wobei ein einzelner Aufgussbeutel (20) von der Förderstrecke (22; 100) abgehoben und in eine Stapelhalteeinrichtung (130) überführt wird, **dadurch gekennzeichnet, dass** die einzelnen Aufgussbeutel (20) durch eine vertikal beweglich geführte Einstoßeinrichtung (111) in einem Stapelhub (SH) der Einstoßeinrichtung (111) in einen Zwischenspeicherschacht (148) der Stapelhalteeinrichtung (130) überführt wird und dass in einem Überführungshub (UH) der Einstoßeinrichtung (111), der größer als der Stapelhub (SH) ist, ein den Verpackungsstapel (180) vervollständigender Aufgussbeutel (20) von der Förderstrecke (22; 100) angehoben und in einen Kassettenspeicherschacht (146) der Stapelhalteeinrichtung (130) überführt wird.

2. Verfahren nach Anspruch 1, **dadurch gekennzeichnet, dass** bei dem Überführungshub (UH) ein den Verpackungsstapel (180) vervollständigender Aufgussbeutel (20) in den Kassettenspeicherschacht (146) überführt wird.

3. Verfahren nach Anspruch 1 oder 2, **dadurch gekennzeichnet, dass** ein unmittelbar nach dem Überführungshub (UH) von der Förderstrecke (22; 100) angehobener Aufgussbeutel in den Zwischenspeicherschacht (148) eingebracht wird, während eine den Kassettenspeicherschacht (146) ausbildende Kassette (132) entleert wird.

4. Verfahren nach einem der vorherigen Ansprüche, **dadurch gekennzeichnet, dass** die Einstoßeinrichtung (111) bei Detektion eines fehlerhaften Aufgussbeutels (20) in eine Ausschusslage (U) verbracht wird, in der der auf der Förderstrecke (22, 100) bewegte fehlerhafte Aufgussbeutel (20) über die Einstoßeinrichtung (111) hinweg bewegt werden und hinter der Einstoßeinrichtung (111) von der Förderstrecke (22, 100) entfernt werden kann.

5. Verfahren nach einem der vorherigen Ansprüche, **dadurch gekennzeichnet, dass** die Aufgussbeutel (20) gegen den Widerstand eines zumindest beim Stapeln in der Stapelhalteeinrichtung (130) beweglichen Widerstandselements (160; 164) in die Stapelhalteeinrichtung (130) überführt werden.

6. Vorrichtung zum Ausbilden von Verpackungsstapeln (180) durch Stapeln von einzelnen Aufgussbeuteln (20) mit einer Förderstrecke (22, 100), auf der Aufgussbeutel (20) von einer Beutelherstellungseinrichtung (102) zu einer Entnahmestation (104) gefördert werden, einer der Entnahmestation (104) zugeordneten Entnahmeeinrichtung (110) und einer Stapelhalteeinrichtung (130) zum Halten einer Stapelung (162) von Aufgussbeuteln (20), wobei die Entnahmeeinrichtung (110) zum Verbringen eines einzelnen Aufgussbeutels (20) von der Förderstrecke (22, 100) zu der Stapelhalteeinrichtung (130) angepasst ausgebildet ist, die einen Zwischenspeicher (134) mit einem zur Aufnahme einer Stapelung (146) von Aufgussbeuteln (20) ausgebildeten Zwischenspeicherschacht (148) und eine auf der der Förderstrecke (22, 100) abgewandten Seite des Zwischenspeichers (134) angeordnete Kassette (132) mit einem zur Aufnahme einer Stapelung (162) von Aufgussbeuteln (20) ausgebildeten Kassettenspeicherschacht (146) aufweist, wobei die Kassette (132) zwischen einer Stapelposition, in der der Zwischenspeicherschacht (148) mit dem Kassettenspeicherschacht (146) fluchtet, und einer Entnahmeposition, in der eine Stapelung (162) aus der Kassette (132) entnommen wird, beweglich ist, **dadurch gekennzeichnet, dass** die Entnahmeeinrichtung (110) in vertikaler Richtung geführt bewegliche und beidseits der Förderstrecke (22, 100) vorgesehene Einstößer (122) aufweist, die von einer Ausgangslage auf Höhe der Förderstrecke (22, 100) zum Einbringen eines auf den Einstößern (122) aufliegenden Aufgussbeutels (20) in die Stapelhalteeinrichtung (130) in eine Einbringlage (E) oberhalb der Förderstrecke (22, 100) translatorisch beweglich sind, wobei die Einstößer (122) beim Überführen in die Einbringlage (E) die Förderstrecke (22, 100) zwischen sich aufnehmen.

7. Vorrichtung nach Anspruch 6, **dadurch gekennzeichnet, dass** die Einstößer (122) zur Ausführung eines Stapelhubes (SH) ausgebildet sind, bei dem die Einstößer (122) bis in den Zwischenspeicherschacht (148) bewegt werden und
dass die Einstößer (122) zur Ausführung eines Überführungshub (UH) ausgebildet sind, der größer ist als der Stapelhub (SH) und bei dem die Einstößer (122) bis in den Kassettenspeicherschacht (146) bewegt werden.

8. Vorrichtung nach Anspruch 6 oder 7, **dadurch gekennzeichnet, dass** der Zwischenspeicher (134) im Bereich seiner Einbringöffnung (136) einander gegenüberliegende Klinken (140) aufweist, die verschwenkbar an dem Zwischenspeicher (134) gelagert sind und in einer federvorgespannten Haltelage eine Auflagefläche (150) für den untersten Aufgussbeutel innerhalb des Zwischenspeichers (134) ausbilden, wobei der Stapelhub (SH) auf Höhe der Einbringöffnung (136; 138) des Zwischenspeichers (134) endet.

9. Vorrichtung nach einem der Ansprüche 6 bis 8, **dadurch gekennzeichnet, dass** die Kassette (132) im Bereich ihrer Einbringöffnung (138) einander gegenüberliegende Klinken (142) aufweist, die verschwenkbar an der Kassette (132) gelagert sind und in einer federvorgespannten Haltelage eine Auflagefläche (150) für den untersten Aufgussbeutel innerhalb der Kassette (132) ausbilden, wobei der Überführungshub (SH) auf Höhe der Einbringöffnung (138) der Kassette (132) endet.

10. Vorrichtung nach Anspruch 9, **dadurch gekennzeichnet, dass** die Klinken (142) in der Haltelage festlegbar sind.

11. Vorrichtung nach Anspruch 9 oder 10, **dadurch gekennzeichnet, dass** die Klinken (140; 142) an ihrer der Förderstrecke (22, 100) zugewandten Unterseite aufeinander zu gerichtete Trichterflächen (152) ausformen.

12. Vorrichtung nach einem der Ansprüche 6 bis 11 **gekennzeichnet durch** einen in einem Stapelschacht (144) der Stapelhalteeinrichtung (130), insbesondere dem Kassettenspeicherschacht (146) verschieblich gelagerten Schlitten (160).

13. Vorrichtung nach einem der Ansprüche 6 bis 12 **gekennzeichnet durch** einen in einer Niederhalteposition (N) in einen Stapelschacht (144) der Stapelhalteeinrichtung (130), insbesondere den Zwischenspeicherschacht (148) eingreifenden Niederhalter (164), der zwischen der Niederhalteposition(N), in der Niederhalter (164) von oben gegen die Stapelung (162) einwirkt, und einer Ruheposition (R), in der Niederhalter (146) außerhalb des Stapelschachtes (144) vorgesehen ist, beweglich ist.

14. Vorrichtung nach einem der Ansprüche 6 bis 13, **dadurch gekennzeichnet, dass** jeder Einstößer (122) eine Auflagefläche (124) für den Aufgussbeutel (20) und einen der Auflagefläche (124) nachgelagerten, die Auflagefläche (124) überragenden Anschlag (126) aufweist.

15. Vorrichtung nach Anspruch 14, **dadurch gekennzeichnet, dass** der Einstößer (124) in eine Ausschusslage (U) verbingbar ist, in der ein auf der Förderstrecke (22, 100) bewegter Aufgussbeutel (20) über die Einstößer (122) hinweg bewegt werden kann, ohne gegen die Anschläge (126) anzuschlagen.
